**Europäisches Patentamt**

**European Patent Office**

**Office européen des brevets**

(19)

(11) Veröffentlichungsnummer : **0 123 105**
**B1**

(12) EUROPÄISCHE PATENTSCHRIFT

(45) Veröffentlichungstag der Patentschrift :
11.01.89

(51) Int. Cl.⁴ : **B 60 K 20/12**

(21) Anmeldenummer : 84102823.6

(22) Anmeldetag : 15.03.84

(54) Entkopplungsvorrichtung für Schaltgestänge.

(30) Priorität : 15.04.83 DE 3313634

(43) Veröffentlichungstag der Anmeldung :
31.10.84 Patentblatt 84/44

(45) Bekanntmachung des Hinweises auf die Patenterteilung : 11.01.89 Patentblatt 89/02

(84) Benannte Vertragsstaaten :
DE FR GB IT SE

(56) Entgegenhaltungen :
EP-A- 0 091 608
DE-A- 3 101 671
DE-C- 3 109 182

(73) Patentinhaber : **Adam Opel Aktiengesellschaft
Bahnhofsplatz 1 Postfach 1560
D-6090 Rüsselsheim (DE)**

(72) Erfinder : **Renk, Rolf, Dipl.-Ing.
Karl-Ulrich-Strasse 13
D-6095 Ginsheim-Gustavsburg 2 (DE)**

(74) Vertreter : **Elbert, Karl, Dipl.-Ing. et al
Adam Opel Aktiengesellschaft Bahnhofplatz 1 Postfach 17 10
D-6090 Rüsselsheim (DE)**

## Beschreibung

Die Erfindung betrifft eine Entkopplungsvorrichtung für Gestänge, insbesondere für das zwischen Getriebe und Schalthebel eines Kraftfahrzeuges angeordnete Schaltgestänge gemäß dem Oberbegriff des Anspruches 1. Eine derartige Entkopplungsvorrichtung ist durch EP-A-91 608 veröffentlicht.

Wird aus Platzersparnisgründen der Motorund Getriebeblock eines Kraftfahrzeuges quer zur Längsachse des Fahrzeuges angeordnet, so besteht die Gefahr des Gangspringens. Durch Fahrbahnanregung und aufgebrachtes Motordrehmoment werden Drehbewegungen des querliegenden Motor- und Getriebeblokkes um seine Längsachse erzeugt und das Schaltgestänge dadurch derart in Schwingungen versetzt, daß Antriebsblock und Schaltgestänge gegeneinander schwingen. Dies kann zu Schüttelbewegungen des Schalthebels und bei entsprechend großen Schwingungsamplituden auch zum selbsttätigen Ausschalten des gerade eingelegten Ganges führen.

In der EP-A-91 608 (veröffentlicht 19.10.1983) ist eine Entkopplungsvorrichtung beschrieben, die zwischen zwei Schaltstangen angeordnet ist, die aus einem den Entkopplungsvorgang steuernden Zwischenstück besteht, das durch eine Bewegung der vom Handschalthebel betätigten Schaltstange verschoben wird, und die nach dem Einschalten eines Ganges eine Hin- und Herbewegung der entkoppelten Schaltstange zuläßt. In das Zwischenstück sind senkrecht zur Längsachse desselben bewegbare Entkopplungselemente eingesetzt, die durch Bewegen der vom Handschalthebel betätigten Schaltstange relativ zum Zwischenstück mit den Enden der Schaltstangen zur Herstellung einer Verbindung zusammenwirken. Das Ende der einen Schaltstange weist eine Zunge auf, die zusammen mit dem Zwischenstück in eine Nut am Ende der anderen Schaltstange hineinragt. Das Zwischenstück ist also auf der Zunge der einen Schaltstange gelagert, was jedoch den Nachteil haben kann, daß beim Schalten erhöhte Reibungskräfte zu überwinden sind. Ferner ist eine besondere Lagerung der Schaltstangenenden innerhalb des Schutzrohres im Bereich der Entkopplungsvorrichtung notwendig.

Aufgabe der Erfindung ist es daher, die Nachteile der bekannten Vorrichtung zu vermeiden und eine Entkopplungsvorrichtung zu schaffen, bei der keine im Gestänge Reibung erzeugende Einkoppelkräfte auftreten und bei der sich die im gekoppelten Zustand vorhandenen Radialkräfte gegenseitig aufheben.

Diese Aufgabe wird gemäß der Erfindung auf vorteilhafte Weise dadurch gelöst, daß das Zwischenstück als mit Bohrungen für die Entkopplungselemente versehene Steuerhülse ausgebildet ist, durch die das Ende der mit dem Handschalthebel verbundenen Schaltstange hindurchragt und die in eine an der mit dem Getriebe verbundenen Schaltstange befestigten und mit den Entkopplungselementen zusammenwirkende Mitnahmehülse hineinragt.

In vorteilhafter Weiterbildung der Erfindung können Steuerhülse und Mitnahmehülse verschiebbar in dem das Schaltgestänge aufnehmenden Schutzrohr gelagert sein.

Die erfindungsgemäße Vorrichtung hat den Vorteil, daß sie einfach im Aufbau ist, wenig bewegte und einfach gestaltete Teile enthält und eine kostengünstige Massenfertigung ermöglicht. Das Gangspringen und Schalthebelschütteln wird wirksam verhindert, und die Entkopplungsvorrichtung ist unabhängig von unterschiedlichen Schaltwegen in einer Richtung. Eine besondere Lagerung der Schaltstangenenden im Bereich der Entkopplungsvorrichtung ist nicht nötig. Es treten keine Einkoppelkräfte auf, die im Schaltgestänge Reibung erzeugen, und die im gekoppelten Zustand herrschenden Radialkräfte heben sich gegenseitig auf. Eine Schmierung ist nicht erforderlich und der Verschleiß ist gering. Durch Gummi- oder Kunststoffringe ist eine einfache Isolation von Schaltstange bzw. Schaltrohr zum Schutzrohr möglich.

Weitere Merkmale und Vorteile der Erfindung können aus den Unteransprüchen, der Zeichnung und der zugehörigen Zeichnungsbeschreibung entnommen werden. In der Zeichnung sind Ausführungsbeispiele gemäß der Erfindung dargestellt, und zwar zeigt :

Fig. 1 ein Schaltgestänge mit Schutzrohr zum Einbau der erfindungsgemäßen Entkopplungsvorrichtung,

Fig. 2 einen Längsschnitt durch die Entkopplungsvorrichtung mit entkoppelten Schaltstangen,

Fig. 3 einen Ausschnitt aus Fig. 2 in vergrößertem Maßstab,

Fig. 4 eine Preßverbindung zwischen Schutzrohr und Rohrstück.

Fig. 5 eine Steuerhülse mit Blattfeder,

Fig. 6 eine Mitnahmehülse mit elastischem Gummioder Weichkunststoffringen und

Fig. 7 einen Schnitt entlang der Linie VII-VII in Fig. 2.

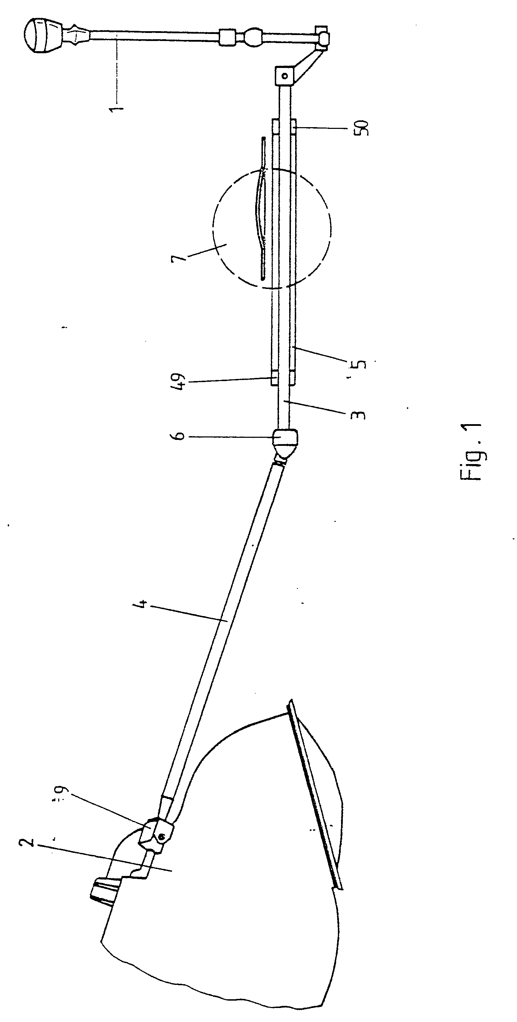

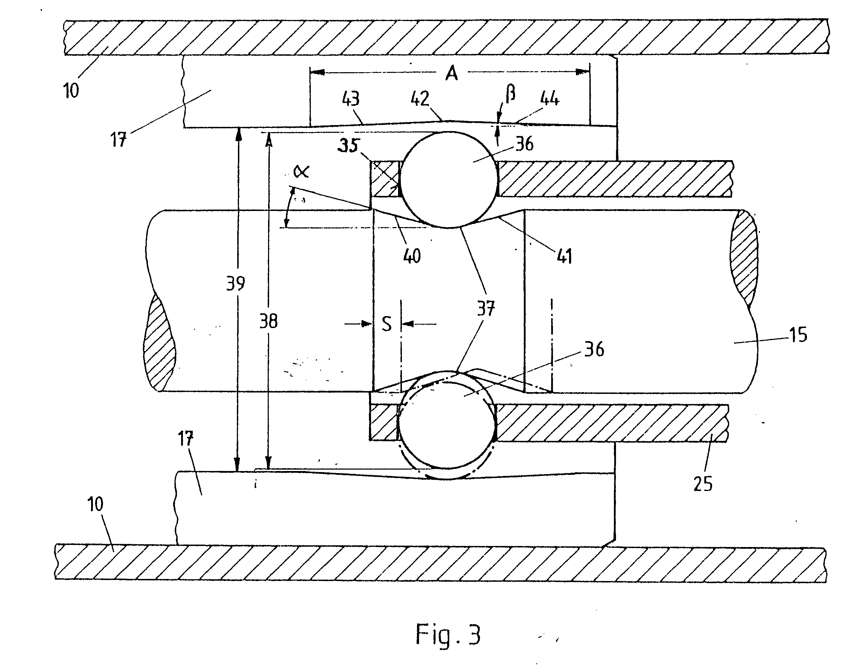

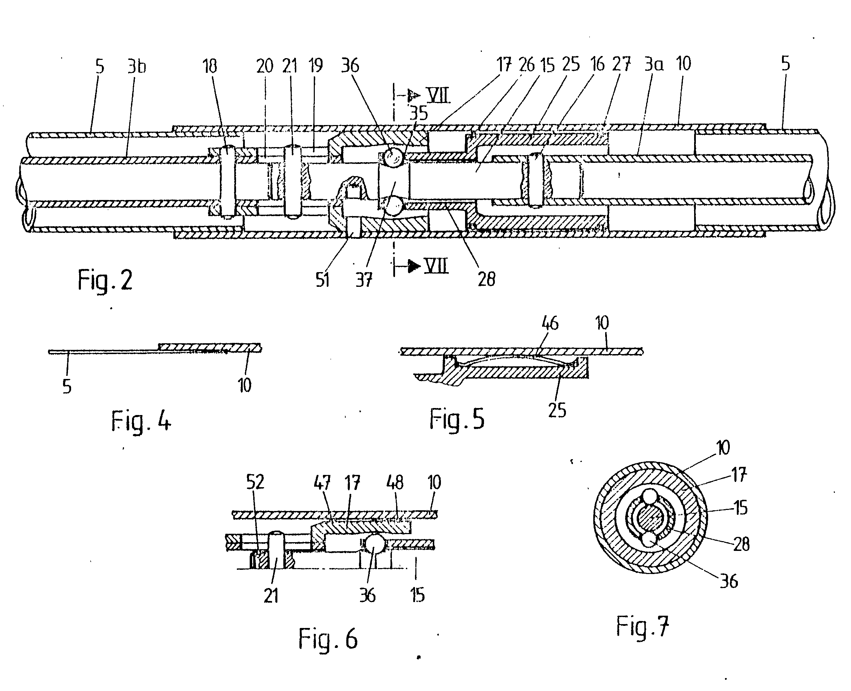

Die Anordnung nach Fig. 1 besteht aus dem Schalthebel 1 und dem Getriebeblock 2 eines Kraftfahrzeuges mit den zugehörigen Schaltstangen 3 und 4. Die mit dem Schalthebel 1 verbundene Schaltstange 3 ist von einem Schutzrohr 5 umgeben und besitzt an ihrem vorderen Ende ein Kreuzgelenk 6 für die Verbindung mit der mit dem Getriebeblock 2 über ein weiteres Kreuzgelenk 9 verbundenen Schaltstange 4. In den Kreuzgelenken 6 und 9 sind elastische Einlagen vorgesehen. Die Entkopplungsvorrichtung ist im Bereich des gestrichelt eingezeichneten Kreises 7 im Schutzrohr 5 angeordnet, das, wie Fig. 2 erkennen läßt, an dieser Stelle eine Unterbrechung aufweist, die durch ein Rohrstück 10 verschlossen wird.

Nach Fig. 2 besitzt die rohrförmige Schaltstange 3a an ihrem vorderen Ende einen Führungsbolzen 15, der mittels eines Stiftes 16 am Rohr der Schaltstange 3a befestigt ist und in das vordere Ende der rohrförmigen Schaltstange 3b hineinragt. Am vorderen Ende des Rohres der Schaltstange 3b ist eine Mitnahmehülse 17 mittels eines Stiftes 18 befestigt. Die Mitnahmehülse 17 ist axial verschiebbar im Rohrstück 10 gelagert und weist gegenüberliegende Längsschlitze 19 auf, die mit gegenüberliegenden Längsschlitzen 20 am vorderen Ende des Schaltstangenrohres 3b fluchten.

In die Längsschlitze 19 und 20 greift ein am vorderen Ende des Führungsbolzens 15 angebrachter Stift 21 ein, so daß Drehbewegungen der Schaltstange 3a auf die Schaltstange 3b übertragen werden. Der Führungsbolzen 15 durchsetzt eine Steuerhülse 25, die mit in Nuten befindlichen federnden Drahtringen 26 und 27 axial verschiebbar im Rohrstück 10 gelagert ist. Ein zylinderförmiger Ansatz 28 an der Steuerhülse 25 weist gegenüberliegende Bohrungen 35 auf, in denen Kugeln 36 angeordnet sind. Eine doppelkegelförmige Vertiefung 37 im Führungsbolzen 15 dient zur Aufnahme der Kugeln 36 und drückt diese bei einer Längsverschiebung der Schaltstange 3a senkrecht zu deren Achse nach außen gegen die Innenfläche der Mitnahmehülse 17, so daß eine kraftschlüssige Verbindung zwischen den beiden Schaltstangen 3a und 3b hergestellt und im Getriebeblock ein Gang ein- oder ausgeschaltet wird.

Wie aus Fig. 3 hervorgeht, findet eine Entkopplung deshalb statt, weil der äußere Durchmesser 38 zwischen den Kugeln 36 einige Zehntel Millimeter kleiner als der Innendurchmesser 39 der Mitnahmehülse 17 ist. Wegen ihres Gewichtes wird die untere Kugel 36 immer auf der Innenfläche der Mitnahmehülse 17 aufliegen. Die Entkopplung ist jedoch gewährleitstet, da bei axialen Bewegungen der Mitnahmehülse 17 diese Kugel sich radial nach oben bewegen kann, ohne daß der Führungsbolzen 15 mitgenommen wird. Axiale Bewegungen führt die Mitnahmehülse 17 insbesondere dann aus, wenn das Getriebe 2 schüttelt.

Wird nun die Schaltstange 3a beim Gangausschalten oder beim Gangeinschalten in Längsrichtung verschoben, dann werden die Kugeln 36 durch die schrägen Flächen 40 oder 41 der doppelkegelförmigen Vertiefung 37 radial nach außen gedrückt (durch strichpunktierte Linien in der unteren Hälfte der Fig. 3 angedeutet), da sie sich wegen ihrer Führung in den Bohrungen 35 der Steuerhülse 25 axial nicht mitbewegen können. Sie werden so weit nach außen gedrückt, bis sie sich mit der Mitnahmehülse 17, die ebenfalls eine doppelkegelförmige Vertiefung 42 mit schrägen Flächen 43 und 44 aufweist, verklemmen und damit die beiden Schaltstangen 3a und 3b miteinander gekoppelt sind, und die Steuerhülse 25 bei den Schaltbewegungen mitgenommen wird. Die federnden Drahtringe 26 und 27 der Steuerhülse 25 haben zusammen eine Reibkraft von etwa 3 N. Wegen der Schalthebelübersetzung von 1 : 3 ist die Schaltkrafterhöhung am Schalthebel 1 nur noch 1 N, was vernachlässigbar klein ist, so daß die Mitbewegung der Steuerhülse 25 beim Schalten kaum ins Gewicht fällt. Die Steuerhülse 25 kann wegen der geringen Beanspruchung aus Kunststoff gespritzt werden.

Die Neigungswinkel $\alpha$ und $\beta$ der schrägen Flächen 40, 41 und 43, 44 sind in ihrer Größe so gewählt, daß immer nur die gegenüberliegenden Schrägflächen 41 und 43 sowie 40 und 44 eine Klemmwirkung mit den Kugeln 36 erzielen können, nicht jedoch die Schrägflächen 41 mit 44 und 40 mit 43. Dies hat den Vorteil, daß bei starken Schüttelbewegungen des Getriebeblockes 2 nach dem Gangwechsel Flächen entgegengesetzter Neigungsrichtung immer gegenüberliegen. In dieser Position entspricht die Länge des Schaltgestänges im entkoppelten Zustand immer der Länge des Schaltgestänges im gekoppelten Zustand, so daß die Stellung des Schalthebels 1 genau definiert ist.

Je nach Wahl der Oberflächenrauhigkeit der Teile 36, 37 und 42 und damit des Reibwertes $\mu$ liegt der Reibungswinkel bei etwa 7°. Demnach muß die Differenz $\alpha-\beta$ der Neigungswinkel ungefähr dem doppelten Reibungswinkel, also 14° entsprechen. Vorteilhafterweise wird $\beta$ so klein wie möglich gewählt, so daß der Leerweg S, den der Führungsbolzen 15 zurücklegen muß, bis die Kopplung stattfindet, möglichst klein wird. Er sollte allerdings nicht so klein gewählt werden, daß eine Klemmwirkung zwischen den Schrägflächen 41 und 44 oder 40 und 43 zustandekommt, wenn die Fertigungstoleranzen groß sind. Es empfiehlt sich deshalb, für $\alpha$ einen Winkel von 16° und für $\beta$ einen Winkel von 2° zu wählen.

Der Leerweg S liegt dann bei maximal 2 mm sehr günstig. Die Länge A für die doppelkegelförmige Vertiefung 42 in der Mitnahmehülse 17 soll etwa dem Schwingweg des Getriebeblockes 2 von ungefähr 20 mm entsprechen.

Die Entkopplung nach dem Schaltvorgang kommt dadurch zustande, daß sich die beim Schaltvorgang zusammengedrückte elastische Einlage im Kreuzgelenk 9 (Fig. 1) entspannt, und die Schaltstangen 3a und 3b sich geringfügig entgegen der durchgeführten Schaltbewegung bewegen. Ohne dieses elastische Glied fände die Entkopplung durch kleinste Schüttelbewegungen des Getriebeblockes 2 statt.

Die Drehbewegung zur Anwahl eines Ganges wird von dem Führungsbolzen 15 über den Stift 21 auf die Schaltstange 3b übertragen. Die Schlitze 19 und 20 sind in ihrer Länge auf den maximalen Getriebeschwingweg ausgelegt.

Bei der Ausführungsform nach Fig. 4 sind Schutzrohr 5 und Rohrstück 10 durch eine preßverbindung miteinander verbunden.

Um störende Geräusche beim Schalten zu vermeiden, ist es zweckmäßig, die Mitnahmehülse 17 mittels weicher Gummioder Kunststoffringe 47 und 48 (0-Ringe) im Rohrstück 10 zu lagern, wie dies aus Fig. 6 hervorgeht. Ein weiterer weicher Gummi- oder Kunststoffring 52 kann am vorderen Ende des Führungsbolzens 15 angeordnet sein.

Bei der Montage des Schaltgestänges am Fahrzeugunterbau wird der Schalthebel 1 in Neutralstellung fixiert. Dann wird das Gestänge in den Schalthebel 1 eingehängt und am Getriebeblock 2 mittels Klemmverbindung befestigt. Hierzu ist unbedingt erforderlich, daß die Schaltstangen 3a und 3b in Längsrichtung starr sind. Dies wird bei entkoppeltem Gestänge dadurch erreicht, daß ein Stift in die Bohrung 51, die sich durch das Rohrstück 10, die Mitnahmehülse 17 bis in den Führungsbolzen 15 erstreckt, eingesetzt wird, wenn sich die genannten Teile in der Stellung nach Fig. 2 befinden. Der Stift wird nach dem Einbau des Schaltgestänges wieder entfernt und die Bohrung 51 kann gegebenenfalls mit Stopfen verschlossen werden.

Die Erfindung wurde oben anhand mehrerer Ausführungsbeispiele näher erläutert, ist jedoch keineswegs auf diese Beispiele beschränkt. So können statt zwei Kugeln 36 auch mehrere in gleichem Abstand voneinander angeordnete Kugeln verwendet werden. Je mehr Kugeln vorhanden sind, umso kleiner ist die Flächenpressung und damit der Verschleiß. Anstelle der Kugeln können auch anders gestaltete Klemmkörper bei entsprechender Anpassung der durch die Klemmkörper miteinander verbundenen Teile eingesetzt werden. Die Büchsen 49 und 50 (Fig. 1) zur Lagerung der Schaltstangen 3a und 3b lassen sich auch so ausbilden, daß die gesamte Entkopplungsvorrichtung vormontiert in das Schutzrohr 5 eingeschoben werden kann und damit das Rohrstück 10 entfällt. Die Verbindung durch die Stifte 16 und 18 kann durch eine Schweißverbindung ersetzt werden. Es gibt noch weitere mannigfaltige Abwandlungsmöglichkeiten in der Gestaltung der Einzelteile der erfindungsgemäßen Entkopplungsvorrichtung und in deren Anordnung, ohne daß dabei der Rahmen der Erfindung verlassen wird.

**Patentansprüche**

1. Entkopplungsvorrichtung (7) für Gestänge, insbesondere für das zwischen Getriebe (2) und Schalthebel (1) eines Kraftfahrzeuges angeordnete Schaltgestänge (3, 4), die zwischen zwei Schaltstangen (3a, 3b) angeordnet ist, die aus einem den Entkopplungsvorgang steuernden Zwischenstück (25, 35) besteht, das durch eine Bewegung der von dem Handschalthebel (1) betätigten Schaltstange (3a) verschoben wird, und die nach dem Einschalten eines Ganges eine Hin- und Herbewegung der entkoppelten Schaltstange (3b) zuläßt, wobei in das Zwischenstück (25, 35) senkrecht zur Längsachse desselben bewegbare Entkopplungselemente (36) eingesetzt sind, die durch Bewegen der vom Handschalthebel (1) betätigten Schaltstange (3a) relativ zum Zwischenstück (25, 35) mit den Enden der Schaltstangen (3a, 3b) zur Herstellung einer Verbindung zusammenwirken, dadurch gekennzeichnet, daß das Zwischenstück als mit Bohrungen (35) für die Entkopplungselemente (36) versehene Steuerhülse (25) ausgebildet ist, durch die das Ende der mit dem Handschalthebel (1) verbundenen Schaltstange (3a) hindurchragt und die in eine an der mit dem Getriebe (2) verbundenen Schaltstange (3b) befestigten und mit den Entkopplungselementen (36) zusammenwirkenden Mitnahmehülse (17) hineinragt.

2. Entkopplungsvorrichtung nach Anspruch 1, dadurch gekennzeichnet, daß die Steuerhülse (25) und die Mitnahmehülse (17) verschiebbar in dem das Schaltgestänge (3) aufnehmenden Schutzrohr (5 bzw. 10) gelagert sind.

3. Entkopplungsvorrichtung nach Anspruch 1 und 2, dadurch gekennzeichnet, daß die Steuerhülse (25) mittels in Nuten angeordneter, federnder Drahtringe (26, 27) im Schutzrohr (5 bzw. 10) verschiebbar gelagert ist.

4. Entkopplungsvorrichtung nach Anspruch 1 bis 3, dadurch gekennzeichnet, daß die Mitnahmehülse (17) in weichen Gummi- oder Kunststoffringen (47, 48) im Schutzrohr (5 bzw. 10) verschiebbar gelagert ist.

5. Entkopplungsvorrichtung nach Anspruch 1 bis 4, dadurch gekennzeichnet, daß der Reibungsschluß zwischen Steuerhülse (25) und Schutzrohr (5) über Blattfedern (46) erfolgt.

6. Entkopplungsvorrichtung nach Anspruch 1 bis 5, dadurch gekennzeichnet, daß das Schutzrohr (5) im Bereich der Entkopplungsvorrichtung unterbrochen und durch ein die Steuerhülse (25) und die Mitnahmehülse (17) aufnehmendes Rohrstück (10) überbrückt ist.

7. Entkopplungsvorrichtung nach Anspruch 1 bis 6, dadurch gekennzeichnet, daß die Steuerhülse (25) einen zylinderförmigen Ansatz (28) besitzt, der die Bohrungen (35) für die Entkopplungselemente (36) aufweist und der in die Mitnahmehülse (17) hineinragt.

8. Entkopplungseinrichtung nach Anspruch 1 bis 7, dadurch gekennzeichnet, daß die Mitnahmehülse (17) gegenüberliegende Längsschlitze (19) aufweist, in die ein am Ende der mit dem Handschalthebel (1) verbundenen Schaltstange (3a) befestigter Stift (21) hineinragt.

9. Entkopplungsvorrichtung nach Anspruch 1 bis 8, dadurch gekennzeichnet, daß das Ende der mit dem Handschalthebel (1) verbundenen Schaltstange (3a) eine doppelkegelförmige Vertiefung (37) für die Entkopplungselemente (36) aufweist.

10. Entkopplungsvorrichtung nach Anspruch 1 bis 9, dadurch gekennzeichnet, daß die Mitnahmehülse (17) auf ihrer Innenseite mit einer doppelkegelförmigen Vertiefung (42) für die Entkopplungselemente (36) versehen ist.

11. Entkopplungsvorrichtung nach Anspruch 1 bis 10, dadurch gekennzeichnet, daß die Schaltstangen (3a, 3b) aus Rohren bestehen, und das mit dem Handschalthebel (1) verbundene Rohr (3a) einen an seinem Ende befestigten und in das andere Schaltrohr (3b) hineinragenden Führungsbolzen (15) mit einer doppelkegelförmigen Vertiefung (37) für die Entkopplungselemente (36) aufweist.

12. Entkopplungsvorrichtung nach Anspruch 1 bis 11, dadurch gekennzeichnet, daß die Entkopplungselemente aus in gleichem Abstand voneinander angeordneten Kugeln (36) bestehen.

13. Entkopplungsvorrichtung nach Anspruch 1 bis 12, dadurch gekennzeichnet, daß die Neigungswinkel (α, β) der schrägen Flächen (40, 41 und 43, 44) der doppelkegelförmigen Vertiefungen (37, 42) in ihrer Größe so gewählt sind, daß immer nur gegenüberliegende Schrägflächen (41, 43 sowie 40, 44) eine Klemmwirkung mit den Kugeln (36) erzielen können.

14. Entkopplungsvorrichtung nach Anspruch 1 bis 13, dadurch gekennzeichnet, daß der Neigungswinkel (α) der Flächen (40, 41) der doppelkegelförmigen Vertiefung (37) des Führungsbolzens (15) etwa 16° und der Neigungswinkel (β) der Flächen (43, 44) der doppelkegelförmigen Vertiefung (42) auf der Innenseite der Mitnahmehülse (17) etwa 2° beträgt.

15. Entkopplungsvorrichtung nach Anspruch 1 bis 14, dadurch gekennzeichnet, daß der Führungsbolzen (15) und die Mitnahmehülse (17) mittels Stifte (16, 18) an den Enden der Schaltrohre (3a, 3b) befestigt oder an diese angeschweißt sind.

16. Entkopplungsvorrichtung nach Anspruch 1 bis 15, dadurch gekennzeichnet, daß das den Führungsbolzen (15) aufnehmende Ende des mit dem Getriebe (2) verbundenen Schaltrohres (3b) gegenüberliegende Längsschlitze (20) für den am Führungsbolzen (15) angebrachten Stift (21) aufweist.

17. Entkopplungsvorrichtung nach Anspruch 1 bis 16, dadurch gekennzeichnet, daß zur Fixierung des Schaltgestänges (3, 4) Bohrungen (51) im Rohrstück (10), in der Mitnahmehülse (17) und im Führungsbolzen (15) vorgesehen sind, die in der Neutralstellung des Schalthebels (1) miteinander fluchten und beim Montieren des Schaltgestänges am Fahrzeugunterbau durch einen Stift miteinander verriegelt werden.

**Claims**

1. Uncoupling device (7) for linkage, in particular for the gearshift linkage (3, 4) disposed between gearbox (2) and gear lever (1) of a motor vehicle, disposed between two gear selector rods (3a, 3b), which consists of a transition piece (25, 35) controlling the uncoupling process and displaced by a movement of the selector rod (3a) operated by the manual gear lever (1), and which after engagement of a gear allows a reciprocating movement of the uncoupled selector rod (3b), wherein in the transition piece (25, 35) are inserted uncoupling elements (36) which are movable perpendicularly to the longitudinal axis thereof and which, by movement of the selector rod (3a) operated by the manual gear lever (1) relative to the transition piece (25, 35), cooperate with the ends of the selector rods (3a, 3b) to make a connection, characterised in that the transition piece is designed as a control sleeve (25) which is provided with bores (35) for the uncoupling elements (36) and through which extends the end of the selector rod (3a) connected to the manual gear lever (1), and which extends into a driver sleeve (17) cooperating with the uncoupling elements (36) and attached to the selector rod (3b) connected to the gearbox (2).

2. Uncoupling device according to claim 1, characterised in that the control sleeve (25) and driver sleeve (17) may be mounted displaceably in the protective tube (5 or 10) which receives the gearshift linkage (3).

3. Uncoupling device according to claims 1 and 2, characterised in that the control sleeve (25) is mounted displaceably in the protective tube (5 or 10) by means of spring wire rings (26, 27) disposed in grooves.

4. Uncoupling device according to claims 1 to 3, characterised in that the driver sleeve (17) is mounted displaceably in soft rubber or plastic rings (47, 48) in the protective tube (5 or 10).

5. Uncoupling device according to claims 1 to 4, characterised in that the frictional connection between control sleeve (25) and protective tube (5) is made by leaf springs (46).

6. Uncoupling device according to claims 1 to 5, characterised in that the protective tube (5) is interrupted in the region of the uncoupling device and bridged by a tube section (10) which receives the control sleeve (25) and the driver sleeve (17).

7. Uncoupling device according to claims 1 to 6, characterised in that the control sleeve (25) has a cylindrical extension (28) which comprises the bores (35) for the uncoupling elements (36) and which extends into the driver sleeve (17).

8. Uncoupling device according to claims 1 to 7, characterised in that the driver sleeve (17) comprises opposed longitudinal slots (19) into which extends a pin (21) attached to the end of the gear selector rod (3a) connected to the manual gear lever (1).

9. Uncoupling device according to claims 1 to 8, characterised in that the end of the gear selector rod (3a) connected to the manual gear lever (1) comprises a double cone-shaped recess (37) for the uncoupling elements (36).

10. Uncoupling device according to claims 1 to 9, characterised in that the driver sleeve (17) is provided on its inner side with a double cone-shaped recess (42) for the uncoupling elements (36).

11. Uncoupling device according to claims 1 to 10, characterised in that the selector rods (3a, 3b) consist of tubes, and the tube (3a) connected to the manual gear lever (1) comprises a guide bolt (15) attached to its end and extending into the other selector tube (3b), with a double cone-shaped recess (37) for the uncoupling elements (36).

12. Uncoupling device according to claims 1 to 11, characterised in that the uncoupling elements consist of equally spaced-apart balls (36).

13. Uncoupling device according to claims 1 to 12, characterised in that the angles of inclination (α, β) of the inclined surfaces (40, 41 and 43, 44) of the double coneshaped recesses (37, 42) are selected in size so that at all times only opposed inclined surfaces (41, 43 and 40, 44) can obtain a clamping effect with the balls (36).

14. Uncoupling device according to claims 1 to 13, characterised in that the angle of inclination (α) of the surfaces (40, 41) of the double cone-shaped recess (37) of the guide bolt (15) is approximately 16°, and the angle of inclination (β) of the surfaces (43, 44) of the double cone-shaped recess (42) on the inside of the driver sleeve (17) is approximately 2°.

15. Uncoupling device according to claims 1 to 14, characterised in that the guide bolt (15) and the driver sleeve (17) are attached by pins (16, 18) to the ends of the selector tubes (3a, 3b) ,or welded to the latter.

16. Uncoupling device according to claims 1 to 15, characterised in that the end which receives the guide bolt (15), of the selector tube (3b) connected to the gearbox (2), comprises opposed longitudinal slots (20) for the pin (21) mounted on the guide bolt (15).

17. Uncoupling device according to claims 1 to 16, characterised in that for fixing the gearshift linkage (3, 4), bores (51) are provided in the tube section (10), in the driver sleeve (17) and in the guide bolt (15), which align with each other in the neutral position of the gear lever (1) and are locked together by a pin when the gearshift linkage is assembled on the vehicle chassis.

**Revendications**

1. Dispositif de désaccouplement (7) de tringleries, notamment pour la tringlerie de manœuvre (3, 4) disposée entre boîte de vitesse (2) et levier de manœuvre (1) d'un véhicule automobile, qui est disposé entre deux tiges de manœuvre (3a, 3b), qui se compose d'une pièce intermédiaire (25, 35) commandant le processus de désaccouplement, laquelle est déplacée par un mouvement de la tige de manœuvre (3a) actionné par le levier à main de manœuvre (1), et qui, après enclenchement d'une vitesse, admet un mouvement en avant et en arrière de la tige de manœuvre (3a) désaccouplée, des éléments de désaccouplement (36) mobiles étant introduits dans la pièce intermédiaire (25, 35), perpendiculairement à l'axe longitudinal de celle-ci, éléments qui collaborent pour établir une liaison, par déplacement de la tige de manœuvre (3a) actionnée par le levier à main de manœuvre (1), par rapport à la pièce intermédiaire (25, 35), avec les extrémités des tiges de manœuvre (3a, 3b), caractérisé en ce que la pièce intermédiaire est réalisée sous forme de douille de commande (25) pourvue d'alésages (35) pour les éléments de désaccouplement (36), douille au moyen desquels émerge l'extrémité de la tige de manœuvre (3a) reliée au levier à main de manœuvre (1) et au moyen desquels émerge la douille d'entraînement (17) fixée dans une tige de manœuvre (3b) reliée à la boîte de vitesse (2) et collaborant avec les éléments de désaccouplement (36).

2. Dispositif de désaccouplement selon la revendication 1, caractérisé en ce que la douille de commande (25) et la douille d'entraînement (17) sont montées de manière à pouvoir se déplacer dans le tube de protection (5, respectivement 10) recevant la tringlerie de manœuvre (3).

3. Dispositif de désaccouplement selon une des revendications 1 et 2, caractérisé en ce que la douille de commande (25) est montée de manière à pouvoir se déplacer dans le tube de protection (5, respectivement 10), au moyen de couronnes de fil (26, 27) élastiques disposées dans des gorges.

4. Dispositif de désaccouplement selon une des revendications 1 à 3, caractérisé en ce que la douille d'entraînement (17) est montée de manière à pouvoir se déplacer dans le tube de protection (5, respectivement 10), dans des anneaux mous en caoutchouc ou en matière plastique (47, 48).

5. Dispositif de désaccouplement selon une des revendications 1 à 4, caractérisé en ce que la liaison par frottement entre douille de commande (25) et tube de protection (5) s'effectue par des ressorts à lame (46).

6. Dispositif de désaccouplement selon une des revendications 1 à 5, caractérisé en ce que le tube de protection (5) est interrompu dans la zone du dispositif de désaccouplement et ponté par une pièce tubulaire (10) recevant la douille de commande (25) et la douille d'entraînement (17).

7. Dispositif de désaccouplement selon une des revendications 1 à 6, caractérisé en ce que la douille de commande (25) possède un appendice (28) de forme cylindrique, qui présente les alésages destinés aux éléments de désaccouplement (36) et émerge dans la douille d'entraînement (17).

8. Dispositif de désaccouplement selon une des revendications 1 à 7, caractérisé en ce que la douille d'entraînement (17) présente des fentes longitudinales (19) opposées, dans lesquelles émerge une goupille (21) fixée à l'extrémité de la tige de manœuvre (3a) reliée au levier à main de manœuvre (1).

9. Dispositif de désaccouplement selon une des revendications 1 à 8, caractérisé en ce que l'extrémité de la tige de manœuvre (3a) reliée au levier à main de manœuvre (1) présente un renfoncement (37) en forme de double cône destiné aux éléments de désaccouplement (36).

10. Dispositif de désaccouplement selon une des revendications 1 à 9, caractérisé en ce que la douille d'entraînement (17) est pourvue sur son côté intérieur d'un renfoncement (42) en forme de double cône destiné aux éléments de désaccouplement (36).

11. Dispositif de désaccouplement selon une des revendications 1 à 10, caractérisé en ce que les tiges de manœuvre (3a, 3b) se composent de tubes et que le tube (3a) relié au levier à main de manœuvre (1) présente un boulon de guidage (15) fixé à son extrémité et émergeant dans l'autre tube de manœuvre (3b), avec un renfoncement (37) en forme de double cône destiné aux éléments de désaccouplement (36).

12. Dispositif de désaccouplement selon une des revendications 1 à 11, caractérisé en ce que les éléments de désaccouplement (36) se composent de billes (36) disposées avec un écartement mutuel identique.

13. Dispositif de désaccouplement selon une des revendications 1 à 12, caractérisé en ce que l'angle d'inclinaison (α, β) des surfaces inclinées (40, 41 et 43, 44) des renfoncements (37, 42) en forme de double cône sont choisis d'une valeur telle que l'on peut toujours obtenir un effet de coincement des surfaces inclinées (41, 43 ainsi que 40, 44) opposées, avec les billes (36).

14. Dispositif de désaccouplement selon une des revendications 1 à 13, caractérisé en ce que l'angle d'inclinaison (α) des surfaces (40, 41) du renfoncement (37) en forme de double cône du boulon de guidage (15) vaut approximativement 16° et que l'angle d'inclinaison (β) des surfaces (43, 44) du renfoncement (42) en forme de double cône situé sur le côté intérieur de la douille d'entraînement (17) vaut environ 2°.

15. Dispositif de désaccouplement selon une des revendications 1 à 14, caractérisé en ce que le boulon de guidage (15) et la douille d'entraînement (17) sont fixés au moyens de goupilles (16, 18) sur les extrémités des tubes de manœuvre (3a, 3b), ou soudés sur celle-ci.

16. Dispositif de désaccouplement selon une des revendications 1 à 15, caractérisé en ce que l'extrémité du tube de manœuvre (3b) relié à la boîte de vitesse (2) et recevant le boulon de guidage (15) présente des fentes longitudinales (20) opposées destinées à la goupille (21) montée sur le boulon de guidage (15).

17. Dispositif de désaccouplement selon une des revendications 1 à 16, caractérisé en ce que pour fixer la tringlerie de manœuvre (3, 4), des alésages (51) sont prévus dans la pièce tubulaire (10), dans la douille d'entraînement (17) et dans le boulon de guidage (15), alésages qui sont alignées entre eux lorsque le levier de manœuvre (1) est en position neutre et qui sont verrouillés ensemble par une goupille lors du montage de la tringlerie de manœuvre sur le châssis du véhicule.

Fig. 1

EP 0 123 105 B1

Fig. 3

EP 0 123 105 B1

Fig. 2

Fig. 4

Fig. 5

Fig. 6

Fig. 7

EP 0 123 105 B1